Europäisches Patentamt

European Patent Office

Office européen des brevets

(11) Veröffentlichungsnummer: **0 291 896 B1**

# EUROPÄISCHE PATENTSCHRIFT

(45) Veröffentlichungstag der Patentschrift: **04.03.92**

(51) Int. Cl.⁵: **G01N 3/18**, G01N 3/00, F28F 11/02

(21) Anmeldenummer: **88107788.7**

(22) Anmeldetag: **14.05.88**

(54) **Verfahren und Einrichtung zur Simulation der Betriebsbeanspruchungen einer Bauteilverbindung.**

(30) Priorität: **21.05.87 DE 3717032**

(43) Veröffentlichungstag der Anmeldung:
**23.11.88 Patentblatt 88/47**

(45) Bekanntmachung des Hinweises auf die
Patenterteilung:
**04.03.92 Patentblatt 92/10**

(84) Benannte Vertragsstaaten:
**BE CH DE ES FR GB IT LI SE**

(56) Entgegenhaltungen:
**EP-A- 0 058 850
EP-A- 0 128 644
US-A- 2 717 300
US-A- 4 523 475**

(73) Patentinhaber: **ABB Reaktor GmbH
Dudenstrasse 44
W-6800 Mannheim 1(DE)**

(72) Erfinder: **Daum, Dieter, Dr.
Starkenburgweg 18
W-6148 Heppenheim(DE)**

(74) Vertreter: **Rupprecht, Klaus, Dipl.-Ing. et al
c/o BBC Brown Boveri Aktiengesellschaft
ZPT Postfach 100351 Kallstadter Strasse 1
W-6800 Mannheim 1(DE)**

**Beschreibung**

Die Erfindung betrifft ein Verfahren zur Simulation der Betriebsbeanspruchungen einer Bauteilverbindung.

Derartige Bauteilverbindungen sind zum Beispiel bei Dampferzeugerreparaturen ausgeführte Walzverbindungen im Rohrbodenbereich zum Überbrücken schadhafter Rohrstellen mit Hülsen oder zum Verschließen von defekten Rohren mit Kohlstopfen. Das Einsetzen einer Hülse ist aus der EP 0128644 A2 und das Verschließen eines defekten Rohres ist aus der EP 0058850 A1 bekannt. Die Belastungsfälle, die bei hohen Temperaturen und großen Druckschwankungen auftreten, müssen simuliert werden, um die Zuverlässigkeit der zur Reparatur eines Rohres geschaffenen Verbindungen im praktischen Betrieb zu gewährleisten.

Der Erfindung liegt die Aufgabe zugrunde, ein Verfahren zur Simulation der Betriebsbeanspruchungen einer Bauteilverbindung anzugeben, das unter möglichst praxisnahen Betriebsbedingungen arbeitet.

Gelöst wird diese Aufgabe erfindungsgemäß durch einen als kreisförmige Scheibe ausgebildeten Testkörper, der in seinem zentralen Innenbereich von mehreren, normal zur Kreisfläche der Scheibe verlaufenden Hohlzylindern durchsetzt ist, die mit Hülsen oder Hohlstopfen bestückt sind und der in seinem Außenbereich keine Hohlzylinder aufweist, wobei durch eine im Außenbereich des Testkörpers eingeleitete Kraft ein den Betriebsbeanspruchungen entsprechender Spannungszustand im Innenbereich entsteht und wobei die Scheibe im Außenbereich durch gleichmäßigen Wärmeeintrag beheizt wird, während der Innenbereich gekühlt wird.

Durch die behinderte Wärmedehnung zwischen dem beheizten Außenbereich und dem gekühlten Innenbereich der Scheibe wird im gelochten Innenbereich ein Zugspannungszustand erzeugt.

Weitere vorteilhafte Ausgestaltungen des Verfahrens sind in den das Verfahren betreffenden abhängigen Ansprüchen angegeben.

Eine Einrichtung zur Durchführung des Verfahrens zeichnet sich dadurch aus, daß dem Außenbereich des Testkörpers eine elektrische Widerstandsheizung und eine Wärmeisolierung zugeordnet ist und daß der Innenbereich vom Außenbereich durch als Kühlkanäle dienende Hohlzylinder abgegrenzt ist.

Damit läßt sich die Wärme des Außenbereichs zuverlässig gegen den auf einer niedrigen Temperatur zu haltenden Innenbereich abgrenzen.

Vorzugsweise wird ein gleichmäßiger Wärmeeintrag durch die Anordnung der elektrischen Widerstandsheizung an der Umfangsfläche des Außenbereichs erzielt.

Zur Ermittlung der Tangentialdehnung wird vorgesehen, daß der Innenumfangsfläche des Hohlstopfens oder der Hülse im Bereich ihrer Verbindung mit dem Hohlzylinder ein Dehnungsmeßstreifen zugeordnet ist.

Damit macht man sich die Tatsache zu Nutzen, daß die an der Hohlstopfen- bzw. Hülseninnenseite gemessenen Tangentialdehnungswerte mit den bekannten Spannungs- und Dehnungsbeziehungen eindeutig auf die entsprechenden Dehnungen in der Kontaktzone zwischen Hohlzylinder und Scheibe bzw. zwischen Hohlzylinder und Hohlstopfen oder Hülse umgerechnet werden können.

Um die Reproduzierbarkeit der Dehnungswerte bei verschiedenen Simulationsvorgängen sicherzustellen, soll der Dehnungsmeßstreifen bei allen Hohlstopfen stets die gleiche Position einnehmen.

Anhand eines Ausführungsbeispiels wird die Simulation der Betriebsbeanspruchungen für den Rohrboden eines Dampferzeugers beschrieben.

Dabei zeigt:

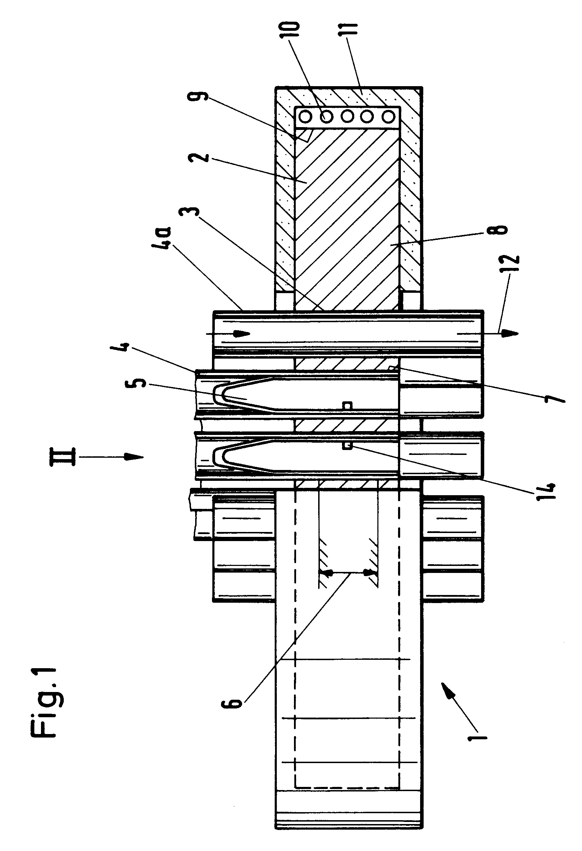

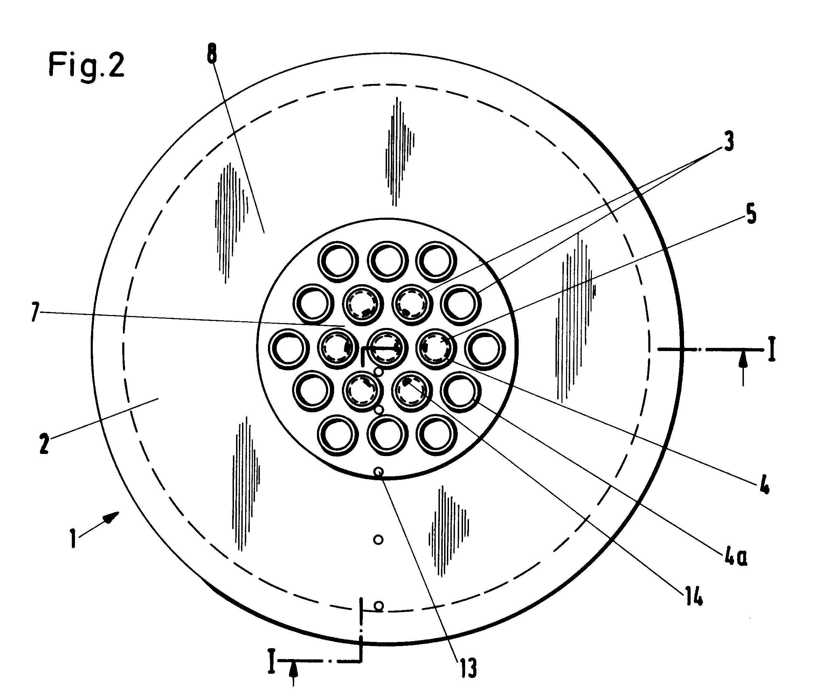

Figur 1      einen Testkörper in einem Halbschnitt entlang der Linie I-I der Figur 2 und

Figur 2      eine Ansicht in Pfeilrichtung II der Figur 1.

Das Verfahren und die Einrichtung wird nach dem Ausführungsbeispiel zur Simulation der Betriebsbeanspruchungen eingesetzt, die in Betriebs-, Prüf- und ggf. auch Störfällen auf die bei Dampferzeuger-Reparaturen im Rohrbodenbereich ausgeführten Walzverbindungen wirken. Defekte Dampferzeugerrohre werden hier häufig durch Einwalzen eines Hohlstopfens verschlossen oder die schadhafte Stelle wird durch Einwalzen einer Hülse überbrückt. Die Verbindung zwischen der Hülse bzw. dem Hohlstopfen und dem Dampferzeugerrohr kann neben Walzen, Schrumpfen oder sonstigen federnden Verspannungen auch durch Schweißen, Löten, Kleben oder dergleichen hergestellt sein. Die bestehende Verbindung zwischen einer Hülse bzw. einem Hohlstopfen und einem Dampferzeugerrohr muß z. B. bei einer Temperatur von mehr als 300 $^\circ$C einem primärseitigen Druck von 228 bar und einem sekundärseitigen Druck von 106 bar ohne Leckageverluste standhalten. Diese Druckdifferenz führt beim Betrieb des Dampferzeugers an der Unterseite des Dampferzeuger-Rohrbodens, also im Einwalzbereich der Hohlstopfen bzw. der Hülsen, zu Druck- bzw. Zugspannungen. Da beim jungfräulich eingewalzten Hohlstopfen bzw. der Hülse oder des Damperzeugerrohres die durch das Einwalzen aufgebauten tangentialen Eigendruckspannungen erfahrungsgemäß nur knapp unterhalb der Fließgrenze des Materials liegen, bewirken Druckspannungen im Rohrboden und die damit verbundene Erhöhung der Druckspannungen im Stopfen eine plastische Verformung der Stopfenwand, die sich nach Entlastung als plastische Rückstauchung der Walzverbindung und damit als Verringerung der Gesamtverspannung äußert.

Mit dem nachfolgend beschriebenen Verfahren und der dazu vorgesehenen Einrichtung werden derartige Belastungsfälle simuliert um die Zuverlässigkeit der Verbindungen im praktischen Betrieb zu gewährleisten.

Ein Testkörper 1 besteht aus einer kreisförmigen Scheibe 2, deren Zentrum von neunzehn Bohrungen 3 durchsetzt ist. In jede Bohrung ist ein Hohlzylinder 4, 4a über die Scheibendicke, die ca. 50 mm beträgt, eingewalzt. In die sieben inneren Hohlzylinder 4 ist jeweils ein Hohlstopfen 5 mit einem vorgebbaren Einwalzbereich 6 eingewalzt. Die geometrische Anordnung der Bohrungen 3 sowie die Abmessungen der Hohlzylinder 4, 4a bzw. der Hohlstopfen 5 und die Einwalztechnik entspricht den Bedingungen bei den zu simulierenden Walzverbindungen im Dampferzeuger-Rohrboden, wobei die Hohlzylinder 4, 4a den Damperzeugerrohren gleichzusetzen sind. Die sieben mit Hohlstopfen 5 bestückten Hohlzylinder 4 bilden einen Innenbereich 7 des Testkörpers 1, der von dem Außenbereich 8 des Testkörpers 1 durch die äußeren nicht mit Hohlstopfen bestückten Hohlzylinder 4a getrennt ist. Einer Umfangsfläche 9 der ca. 300 mm im Durchmesser aufweisenden Scheibe 2 ist eine elektrische Widerstandsheizung 10 zugeordnet. Die Widerstandsheizung und der restliche Teil des Außenbereiches 8 sind mit einer Isolierung 11 zur Vermeidung von Wärmeverlusten versehen.

Nach dem erfindungsgemäßen Verfahren wird der Außenbereich 8 erwärmt, während der Innenbereich 7 mittels durch die äußeren Hohlzylinder 4a strömenden Kühlwassers (Pfeilrichtung 12) gekühlt wird. Der Einsatz von Hohlzylindern 4a als Kühlkanäle ist nicht zwingend erforderlich. Stattdessen können unmittelbar in die Bohrungen 3 nicht dargestellte Fittinge eingeschraubt werden, an die sich eine Kühlwasserversorgung anschließen läßt. Durch die behinderte Wärmedehnung zwischen dem beheizten, von einer Isolierung 11 umgebenen Außenbereich 8 und dem gekühlten Innenbereich 7 der Scheibe 2 wird im gelochten Innenbereich 7 ein Zugspannungszustand erzeugt, der sich durch Regelung der Beheizung feinfühlig an die jeweiligen Sollbelastungszustände anpassen läßt. Je nach dem zu simulierenden Spannungszuständ im Innenbereich 7 treten Temperaturdifferenzen bis zu ca. 300 °C zwischen dem Innenbereich 7 und dem Außenbereich 8 auf, deren Verlauf durch mehrere in radialer Richtung im Testkörper 1 angeordnete Temperaturfühler 13 überwacht wird. Mit der vorübergehenden Erzeugung eines Zugspannungszustandes im Innenbereich 7 des Testkörpers 1 erfolte eine elastische Aufweitung der Bohrungen 3 des Innenbereiches 7, sodaß sich die eingangs erwähnte bleibende plastische Rückstauchung des Hohlstopfens 5 an der Unterseite des Rohrbodens eindeutig simulieren läßt.

Da die Lochgeometrie des Innenbereiches 7 mit der des wirklichen Dampferzeuger-Rohrbodens übereinstimmt, stellt sich die Spannungs- und Dehnungsverteilung im Stegbereich zwischen den Bohrungen, insbesondere die Spannungs- und Dehnungsüberhöhung am Bohrungsrand, zwangsläufig richtig ein.

Zur Überwachung des Dehnungszustandes des Innenbereiches 7 ist in jeden Hohlstopfen 5, jeweils in der mitte des Einwalzbereiches 6 in Umfangsrichtung ein Dehnungsmeßstreifen 14 eingeklebt, wobei die azimutale Position im Hinblick auf Reproduzierbarkeit der Meßwerte gegenüber einer Nachbarbohrung gewählt wird. Die an dieser leicht zugängigen Stelle ermittelten tangentialen Dehnungsmeßwerte lassen sich unter Verwendung der bekannten Spannungs- und Dehnungsbeziehungen eindeutig auf die entsprechenden Dehnungen in den Kontaktzonen umrechnen.

Sobald der entsprechende Sollwert der Betriebsbelastung mit der Simulation stationär erreicht ist, können die für die Qualifikation der Walzverbindung erforderlichen Untersuchungen, wie Dichtheitsuntersuchung durch Heliumlecktest oder hydraulische Auspreßversuche des Hohlstopfens, durchgeführt werden. Die dazu erforderlichen Anschlußverbindungen und Aggregate sind aus Gründen der vereinfachten Darstellung ebensowenig dargestellt wie die Anschlüsse für die Kühlwasserversorgung.

Bezugszeichenliste

| 1 | Testkörper |
|---|---|
| 2 | Scheibe |
| 3 | Bohrung |
| 4, 4a | Hohlzylinder |
| 5 | Hohlstopfen |
| 6 | Einwalzbereich |
| 7 | Innenbereich |
| 8 | Außenbereich |
| 9 | Umfangsfläche |
| 10 | Widerstandsheizung |
| 11 | Isolierung |
| 12 | Pfeilrichtung |
| 13 | Temperaturfühler |
| 14 | Dehnungsstreifen |

**Patentansprüche**

1. Verfahren zur Simulation der Betriebsbeanspruchungen einer Bauteilverbindung mit einem als kreisförmige Scheibe (2) ausgebildeten Testkörper (1), der in seinem Zentralen Innenbereich (7) von mehreren normal zur Kreisfläche der Scheibe verlaufenden Hohlzylindern (4) durchsetzt ist, die mit Hülsen oder Hohlstopfen (5) bestückt sind und der in seinem Außenbereich (8) keine Hohlzylinder (4) aufweist, wobei durch eine im Außenbereich (8) des Testkörpers (1) eingeleitete Kraft ein den Betriebsbeanspruchunge entsprechender Spannungszustand im Innenbereich (7) entsteht und wobei die Scheibe (2) im Außenbereich (8) durch gleichmäßigen Wärmeeintrag beheizt wird, während der Innenbereich (7) gekühlt wird.

2. Verfahren nach Anspruch 1, dadurch gekennzeichnet, daß der Spannungszustand im Innenberich (7) durch Regelung der Heiz- und/oder Kühlleistung eingestellt wird.

3. Verfahren nach Anspruch 1 oder 2, dadurch gekennzeichnet, daß die Tangentialdehnung an den Verbindungsstellen zwischen Hohlstopfen (5) bzw. Hülse und Hohlzylinder (4) überwacht wird.

4. Verfahren nach Anspruch 1 oder 2, dadurch gekennzeichnet, daß die Temperatur der Scheibe (2) an mehreren Stellen ermittelt wird.

5. Einrichtung zur Durchführung des Verfahrens nach Anspruch 1 zur Simulation der Betriebsbeanspruchungen einer Bauteilverbindung mit einem als kreisförmige Scheibe (2) ausgebildeten Testkörper (1), der in seinem zentralen Innenbereich (7) von mehreren, normal zur Kreisfläche der Scheibe verlaufenden Kohlzylindern (4) durchsetzt ist, die mit Hülsen oder Hohlstopfen (5) bestückt sind und der in seinem Außenbereich (8) keine Hohlzylinder (4) aufweist, wobei durch eine im Außenbereich (8) des Testkörpers (1) eingeleitete Kraft einen den Betriebsbeanspruchungen entsprechender Spannungszustand im Innenbereich (7) entsteht, wobei dem Außenbereich (8) des Testkörpers (1) eine elektrische Widerstandsheizung (10) und eine Wärmeisolierung (11) zugeordnet ist und wobei der Innenbereich (7) vom Außenbereich (8) durch als Kühlkanäle dienende Hohlzylinder (4a) abgegrenzt ist.

6. Einrichtung nach Anspruch 5, dadurch gekennzeichnet, daß die elektrische Widerstandsheizung (10) an einer Umfangsfläche (9) des Außenbereichs (8) angeordnet ist.

7. Einrichtung nach Anspruch 5 oder 6, dadurch gekennzeichnet, daß der Innenumfangsfläche des Hohlstopfens (5) oder der Hülse im Bereich ihrer Verbindung mit dem Hohlzylinder (4) ein Dehnungsmeßstreifen (14) zugeordnet ist.

8. Einrichtung nach Anspruch 7, dadurch gekennzeichnet, daß zur Sicherstellung der Reproduzierbarkeit des Dehnungswertes die Dehnungsmeßstreifen (14) gegenüber der Lochgeometrie der Scheibe (2) bei allen Simulationsvorgängen die gleiche Position einnehmen.

## Claims

1. Method for simulation of the operational demands on a connection between components, with a test body (1) formed as a circular disc (2), which is penetrated in its central inner region (7) by a plurality of hollow cylinders (4) which run normally to the circular surface of the disc and are fitted with sleeves or hollow plugs (5), and which has in its outer region (8) no hollow cylinders (4), a stress condition corresponding to the operational demands being created in the inner region (7) by a force applied in the outer region (8) of the test body (1) and the disc (2) heated in the outer region (8) by uniform entry of heat, while the inner region (7) is cooled.

2. Method according to Claim 1, characterised in that the stress condition in the inner region (7) is adjusted by control of the heating and/or cooling capacity.

3. Method according to Claim 1 or 2, characterised in that the tangential strain at the connection places between hollow plug (5) or sleeve and hollow cylinders (4) is monitored.

4. Method according to Claim 1 or 2, characterised in that the temperature of the disc (2) is ascertained at a plurality of places.

5. Apparatus for the performance of the method according to Claim 1 for simulation of the operational demands on a connection between components, with a test body (1) formed as a circular disc (2), which is penetrated in its central inner region (7) by a plurality of hollow cylinders (4) which run normally to the circular surface of the disc and which are fitted with sleeves or hollow plugs (5), and which has in its outer region (8) no hollow cylinders (4), a stress condition corresponding to the operational demands being created in the inner region (7) by a force applied in the outer region (8) of the test body (1), an electric resistance heater (10) and thermal insulation (11) being associated with the outer region (8) of the test body (1), and the inner region (7) being delimited from the outer region (8) by hollow cylinders (4a) serving as cooling passages.

6. Apparatus according to Claim 5, characterised in that the electric resistance heater (10) is arranged on a circumferential surface (9) of the outer region (8).

7. Apparatus according to Claim 5 or 6, characterised in that a strain gauge (14) is associated with the inner circumferential surface of the hollow plug (5) or of the sleeve, in the region of its connection with the hollow cylinder (4).

8. Apparatus according to Claim 7, characterised in that to ensure reproducibility of the expansion value, the strain gauges (14) assume the same position with respect to the hole geometry of the disc (2) in every simulation operation.

**Revendications**

1. Procédé de simulation des sollicitations en service d'une liaison d'organe comprenant une pièce d'essai (1) se présentant sous la forme d'une plaque circulaire (2), qui est traversée dans sa partie intérieure (7) centrale par plusieurs cylindres creux (4) perpendiculaires à la surface circulaire de la plaque, munis de douilles ou de bouchons creux (5), et qui ne comporte pas de cylindres creux (4) dans sa partie extérieure (8), un état de contrainte correspondant aux sollicitations en service étant généré dans la partie intérieure (7) par application d'une force dans la partie extérieure (8) de la pièce d'essai (1), et la plaque (2) étant chauffée dans sa partie extérieure (8) par apport régulier de chaleur, tandis que la partie intérieure (7) est refroidie.

2. Procédé selon la revendication 1, caractérisé en qu'on règle l'état de contrainte dans la partie intérieure (7) par régulation de la puissance calorifique et/ou de la puissance frigorifique.

3. Procédé selon la revendication 1 ou 2, caractérisé en qu'on surveille la dilatation tangentielle au niveau des points de liaison entre les bouchons creux (5) ou les douilles et les cylindres creux (4).

4. Procédé selon la revendication 1 ou 2, caractérisé en qu'on détermine la température de la plaque (2) en plusieurs points.

5. Dispositif pour la mise en oeuvre du procédé selon la revendication 1 pour la simulation des sollicitations en service d'une liaison d'organe, comprenant une pièce d'essai (1) se présentant sous la forme d'une plaque (2) circulaire, qui est traversée dans sa partie intérieure (7) centrale par plusieurs cylindres creux (4) perpendiculaires à la surface circulaire de la plaque, munis de douilles ou de bouchons creux (5), et qui ne comporte pas de cylindres creux (4) dans sa partie extérieure (8), un état de contrainte correspondant aux sollicitations en service étant généré dans la partie intérieure (7) par application d'une force dans la partie extérieure (8) de la pièce d'essai (1), un chauffage par résistance électrique (10) et une isolation thermique (11) étant associés à la partie extérieure (8) de la pièce d'essai (1) et la partie intérieure (7) étant séparée de la partie extérieure (8) par des cylindres creux (4a) servant de conduits de refroidissement.

6. Dispositif selon la revendication 5, caractérisé en ce que le chauffage par résistance électrique (10) est disposé sur une surface périphérique (9) de la partie extérieure (8).

7. Dispositif selon la revendication 5 ou 6, caractérisé en ce qu'une jauge de contrainte (14) est associée à la surface périphérique intérieure du bouchon creux (5) ou de la douille dans la région de sa liaison avec le cylindre creux (4).

8. Dispositif selon la revendication 7, caractérisé en ce que pour garantir la reproductibilité de la valeur de l'allongement, les jauges de contraintes (14) occupent toujours la même position par rapport à la géométrie des trous de la plaque (2) dans tous les processus de simulation.

# Fig.1

EP 0 291 896 B1

Fig.2